# EUROPEAN PATENT SPECIFICATION

(11) **EP 3 183 605 B1**
(45) Date of publication and mention of the grant of the patent: **14.08.2019**
(21) Application number: 15749837.9
(22) Date of filing: 14.08.2015
(51) Int. Cl.: G01W 1/10, G01W 1/00

(54) **METHOD AND APPARATUS FOR WEATHER FORECASTING**
VERFAHREN UND VORRICHTUNG ZUR WETTERVORHERSAGE
PROCÉDÉ ET APPAREIL DE PRÉVISION MÉTÉOROLOGIQUE

(30) Priority: 20.08.2014 GB 201414783
(43) Date of publication of application: 28.06.2017
(73) Proprietor: Jaguar Land Rover Limited, Coventry, Warwickshire CV3 4LF (GB)
(72) Inventor: DERVITSIOTIS, Stefanos, Whitley Warwickshire CV3 4LF (GB); VIRK, Peter, Whitley Warwickshire CV3 4LF (GB)
(74) Representative: Holmes, Matthew William
(86) International application number: PCT/EP2015/068748
(87) International publication number: WO 2016/026779

(56) References cited:
- JP-A- H08 189 975
- JP-A- 2007 237 789
- US-A1- 2011 118 897
- US-B1- 6 919 821

## Description

### TECHNICAL FIELD

The present disclosure relates to a method and apparatus for determining a forecast of weather conditions. In particular, although not exclusively, some embodiments of the invention relate to a method and apparatus for determining whether one or more predetermined types of weather will occur. Other embodiments of the invention relate to a system for determining a weather forecast.

### BACKGROUND

It is known for a vehicle to operate in response to current weather conditions. For example, the vehicle may operate windscreen wipers according to rain as a current weather condition, or one or more heating systems, such as windscreen heating, according to a current temperature. However operating systems of the vehicle, such as those associated with closing windows, a sunroof or a moveable, openable/closeable or convertible roof of the vehicle according to current weather conditions may be insufficient in some circumstances.

US 2011/0118897 A1 discloses detecting environmental conditions, determining a probability of the occurrence of the environmental event based on the environmental conditions, and protecting the vehicle from the environmental event.

It is an object of embodiments of the invention to at least mitigate one or more of the problems of the prior art.

### SUMMARY OF THE INVENTION

According to an aspect of the present invention there is provided a computer-implemented method, comprising receiving data indicative of ambient conditions from one or more sensors associated with a vehicle, wherein the data indicative of ambient conditions comprises data indicative of atmospheric pressure, and the one or more sensors are utilised for one or more additional purposes besides weather prediction, determining if the data is indicative of a forecast of one or more weather conditions according to at least one predetermined condition, outputting data indicative of the forecast, and configuring one or more systems of the vehicle responsive to the output data indicative of the forecast.

Advantageously, the computer-implemented method may determine a weather forecast. Advantageously, weather conditions local to the vehicle may be predicted. The vehicle may advantageously adapt to the local weather conditions.

The one or more systems of the vehicle may comprise means for enclosing the vehicle. The vehicle may become enclosed to advantageously prevent weather intrusion.

The means for enclosing the vehicle may comprise one of means for closing one or more windows and a roof of the vehicle. Opening apertures of the vehicle may be closed to advantageously prevent weather ingress.

The data indicative of ambient conditions may comprise data indicative of atmospheric pressure.

The method may comprise receiving data indicative of an altitude of the vehicle and correcting the data indicative of the atmospheric pressure according to the altitude. Advantageously compensating for altitude enables more accurate prediction.

The method may comprise receiving data indicative of the altitude based upon wireless navigation signals.

The data indicative of the atmospheric pressure may be received from a pressure sensor. The pressure sensor may be an embedded pressure sensor and may be associated with an existing system on the vehicle. The data indicative of the atmospheric pressure may be received from a mass airflow (MAF) sensor associated with an engine of the vehicle. Alternatively, or in addition, the data indicative of the atmospheric pressure may be received from a pressure sensor associated with a heating, ventilation or air conditioning (HVAC) system of the vehicle. The pressure sensor may be associated with a heating system and/or a ventilation system and/or an air conditioning system. Advantageously existing components of the vehicle may be used for prediction.

The method may comprise receiving weather data indicative of the one or more weather conditions and correlating the weather data with the output data indicative of the forecast.

The method may comprise determining if the data is indicative of one or more weather conditions based upon the correlation between the weather data and the output data indicative of previous forecasts. Advantageously previous predictions may be used to improve future forecasts.

The method may comprise determining if the data is indicative of one or more weather conditions based upon a trend in the data indicative of the atmospheric pressure. Advantageously more reliable forecasts may be produced based upon a trend.

The data indicative of ambient conditions may comprise data indicative of a light level. The at least one predetermined condition may comprise determining if a trend is present in the data indicative of the light level and the atmospheric pressure.

The method may comprise determining whether the ambient conditions are indicative of cloud cover and/or night time based upon the data indicative of the light level.

The data indicative of ambient conditions may comprise one or more of data indicative of a temperature external to the vehicle, and data indicative of humidity.

The outputting data indicative of the forecast may comprise transmitting data to a remote computing device.

According to an aspect of the present invention there is provided an apparatus for determining a weather forecast, comprising one or more sensors for association with a vehicle arranged to determine ambient conditions proximal to the vehicle when in use and to output data indicative of the conditions, wherein the one or more sensors comprises a sensor utilised for one or more additional purposes besides weather prediction, for outputting data to the control unit indicative of atmospheric pressure, a control unit arranged to receive data, to determine if the data is indicative of a forecast of one or more weather conditions based upon at least one predetermined condition and to output data indicative of the forecast, and arranged to configure one or more systems of the vehicle responsive to the output data indicative of the forecast.

The apparatus may comprise at least one mechanical actuator for configuring the vehicle responsive to the data indicative of the forecast. The at least one mechanical actuator may be arranged for enclosing the vehicle. The at least one mechanical actuator may be arranged to close one or more windows and/or a roof of the vehicle responsive to the data indicative of the forecast.

The one or more sensors may comprise a sensor for outputting data to the control unit indicative of atmospheric pressure.

The data indicative of the atmospheric pressure may be received from a pressure sensor. The pressure sensor may be an embedded pressure sensor and may be associated with an existing system on a vehicle. The data indicative of the atmospheric pressure may be received from a mass airflow (MAF) sensor associated with an engine of the vehicle. Alternatively, or in addition, the data indicative of the atmospheric pressure may be received from a pressure sensor associated with a heating, ventilation or air conditioning (HVAC) system of the vehicle. The pressure sensor may be associated with a heating system and/or a ventilation system and/or an air conditioning system.

The control unit may be arranged to receive data indicative of an altitude of the vehicle and to correct the data indicative of the atmospheric pressure according to the altitude. The received data indicative of the altitude may be based upon received wireless navigation signals.

The apparatus may comprise one or more sensors for determining weather conditions and outputting weather data to the control unit indicative thereof, wherein the control unit is arranged to correlate the weather data with the output data indicative of the forecast.

The weather conditions may comprise rain.

The control unit may be arranged to determine if the data is indicative of one or more weather conditions based upon the correlation between the weather data and the output data indicative of previous forecasts.

The control unit may be arranged to store, in a data store, data indicative of the ambient conditions over a period of time and the at least one predetermined condition may comprise determining if the stored data is indicative of one or more weather conditions based upon a trend in the data. The stored data may be indicative of air pressure over the period of time.

The apparatus may comprise a sensor arranged to determine a light level and to output light data indicative thereof.

The control unit may be arranged to determine if a trend is present in the light data level and the data indicative of the atmospheric pressure.

The one or more sensors may comprise one or more of: a sensor arranged to determined temperature external to the vehicle, and a sensor arranged to determine humidity.

The apparatus may comprise a communication device arranged to transmit the data indicative of the forecast to a remote computing device.

According to an aspect of the present invention there is provided a system, comprising a server computer, at least one vehicle having one or more sensors for measuring ambient conditions and a control unit arranged to determine a weather forecast based on the ambient conditions, wherein the one or more sensors comprise a sensor, utilised for one or more additional purposes besides weather prediction, for outputting data to the control unit indicative of atmospheric pressure, wherein the control unit is communicably coupled to the server computer to communicate forecast data indicative of the weather forecast to the server, wherein the server is arranged to communicate information indicative of the forecast to a computing device associated with one or more vehicles, and wherein the computing device is arranged to control a configuration of the vehicle responsive to the forecast. Advantageously the forecast may be distributed to one or more vehicles.

The control unit may be arranged to communicate information indicative of a geographic location of the vehicle to the server associated with the forecast data.

The server may be arranged to determine a geographic region affected by the forecast. The region may be determined based on the geographic location associated with the forecast data.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described, by way of example only, with reference to the accompanying figures, in which:
Figure 1 shows a system according to an embodiment of the invention;
Figure 2 shows a method according to an embodiment of the invention;
Figure 3 shows a method according to a further embodiment of the invention;
Figure 4 shows a system according to a further embodiment of the invention; and
Figure 5 shows a method according to a still further embodiment of the invention.

### DETAILED DESCRIPTION

Embodiments of the invention utilise one or more sensors associated with a vehicle in order to determine a weather forecast. The one or more sensors may be embedded sensors of the vehicle. That is the one or more sensors may be associated with existing systems on the vehicle. The weather forecast may encompass one or more aspects of the weather such as a prediction of rainfall. In some embodiments the sensors are sensors associated with a vehicular function such as engine management or air conditioning of the vehicle. In other words, in some embodiments, the sensors are existing sensors of the vehicle which are utilised for one or more additional purposes besides weather prediction. That is data from the sensors is provided to a system according to an embodiment of the invention in addition to one or more other vehicle systems such as engine management, heating, ventilation and air conditioning (HVAC) control, navigation, headlight and/or windscreen wiper control.

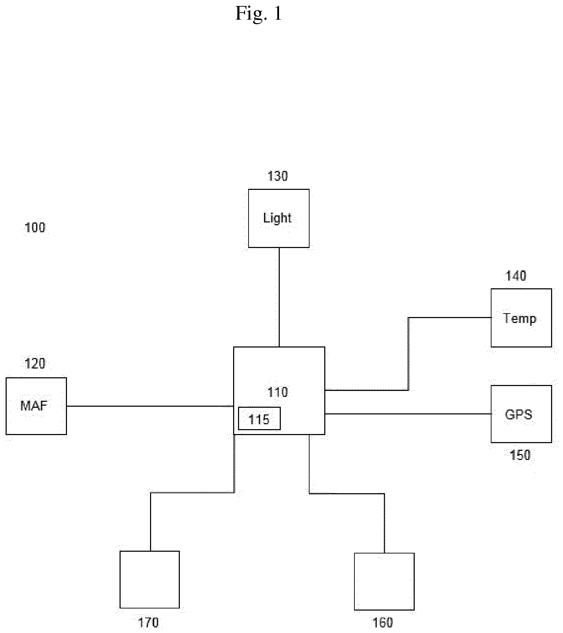

Referring to Figure 1, a forecasting system 100 according to an embodiment of the invention is illustrated. The system 100 is a weather forecasting system for a vehicle. The vehicle may be any type of vehicle including a road-going vehicle i.e. wheeled vehicle, which may be powered by a conventional (fossil fuel) engine, a hybrid power system or electric-powered.

The system 100 comprises a control means in the form of a control unit 110 which is arranged to receive signals from one or more ambient sensing means in the form of one or more sensors associated with the vehicle. The sensors are arranged to output data indicative of ambient conditions proximal to the vehicle. The ambient conditions comprise one or both of weather and/or light conditions. The sensors may comprise sensors for monitoring air (atmospheric or barometric) pressure, temperature and light level. In some embodiments the control unit 110 is arranged to receive data indicative of an altitude of the vehicle based on received wireless navigation signals, such as GPS signals. The control unit 110 comprises, or is communicably coupled to, a data store 115 for operatively storing data. As will be explained, the data store 115 may be used by the control unit 110 to log data, such as data indicative of air pressure, over a period of time to determine a trend in the data. In some embodiments, the data store 115 may be used to correlate a forecast determined by the control unit 110 with data indicative of one or more weather conditions experienced by the vehicle following the forecast, as will be explained.

The system 100 comprises 120 an atmospheric pressure sensor 120 which is arranged to determine and output data indicative of air pressure at the vehicle's location. The pressure sensor 120 may, in some embodiments, be an existing embedded sensor from which the atmospheric pressure may be determined. In some embodiments the pressure sensor 120 may be an existing mass air flow (MAF) sensor from which the atmospheric pressure may be determined. The existing MAF sensor is typically used to help control the air/fuel mixture in an internal combustion engine. In other embodiments the pressure sensor 120 may be an existing pressure sensor embedded in a HVAC system.

The system further comprises a light sensor 130 for determining and outputting data indicative of a light level external to the vehicle. The light level sensor 130 may be an existing light level sensor of the vehicle. For example the light sensor may also be as used for controlling operation of one or more lights of the vehicle, such as headlights of the vehicle.

The system 100 comprises a temperature sensor 140 for measuring an air temperature external to the vehicle. The temperature sensor may be used by another system of the vehicle, such as an engine management system of the vehicle in conjunction with the MAF sensor 120 for determining an amount of oxygen received by the engine of the vehicle. Alternatively, the temperature sensor 140 may be a sensor for measuring an external temperature of the vehicle, such as for display internally within the vehicle to occupants. Alternatively, or in addition, the temperature sensor 140 may be a sensor for measuring an ambient temperature for HVAC control.

In some embodiments the system 100 further comprises a wireless receiver 150 for receiving wireless navigation signals. The wireless navigation signals may be Global Positioning System (GPS) signals, although the navigation signals may be from another wireless navigation system such as Galileo (RTM). Whilst Figure 1 shows a signal output by the wireless receiver 150 being received directly by the control unit 110 it will be realised that this is merely illustrative and the receiver 150 may be part of a navigation system (not shown) with data being indirectly received by the control unit 110 from the navigation system. In particular, the control unit 110 may receive altitude data indicative of a current altitude of the vehicle from the navigation system. In other embodiments the control unit 110 is arranged to determine the altitude of the vehicle from the received navigation signals.

In some embodiments the system 100 comprises one or more output means 160, 170 controlled by the control unit 110 which are operated responsive to a forecast determined by the control unit 110. The output means 160, 170 may include one or more mechanical actuation means 160 for controlling a mechanical configuration of the vehicle. For example a mechanical actuation means 160 may comprise a motor arranged to control a position of one or more windows of the vehicle i.e. moving the one or more windows between an open and closed position or may be arranged to control a position a vehicle roof, such as a hard or soft openable roof of a convertible vehicle. The output means may comprise, in some embodiments, a communication means 170 for communicating data indicative of the forecast to a computing device such as a server computer, as will be explained. The communication means 170 may be a communication device for wirelessly communicating data over a telecommunication network, such as based on Long Term Evolution (LTE) standard, although it will be realised that other communication standards may be used.

The control unit 110 is arranged to receive data indicative of ambient conditions proximal to the vehicle, such as ambient lighting conditions as measured by the light sensor 130 and air pressure as measured by, or derived from measurements of, the pressure sensor 120. The control unit 110 is arranged to determine a forecast of one or more weather conditions based on the received data. The forecast may be a forecast of one or more predetermined weather conditions such as rain. The forecast may be indicative of a likelihood of the weather condition within a predetermined period of time, such as 5 or 10 minutes, although it will be realised that other time periods may be envisaged. The forecast determined by the control unit 110 may be based upon a change in one or more of the ambient conditions within a predetermined period prior to a current point in time. For example, the control unit 110 may determine the forecast based upon a change in one or more of the air pressure, temperature and light level. The predetermined period prior to the current time may be, for example, 5, 10 or 15 minutes, although it will be realised that other periods of time may be used. In other embodiments the control unit 110 is arranged to determine the forecast based upon a rate of change of one or more of the air pressure, temperature and light level. For example, if the air pressure is dropping at a rate greater than a predetermined rate the control unit 110 may determine the forecast of rain.

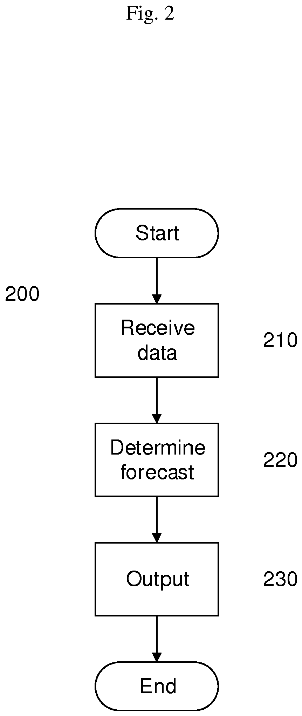

Figure 2 illustrates a method 200 according to an embodiment of the invention. The method 200 is a method of forecasting one or more predetermined weather conditions. The weather condition described with reference to Figure 2 is a forecast of rain, although it will be realised that this is exemplary and that other weather conditions may be forecast.

The method 200 comprises a step of receiving data from one or more sensors 120, 130, 140, 150 of the system which are associated with a vehicle. The data is indicative of current ambient conditions proximal to the vehicle. The control unit 110 is arranged to receive pressure data indicative of air pressure from, or derived from, the air pressure sensor 120. The control unit 120 may further receive data indicative of the light level from the light sensor 130. In some embodiments the control unit 110 is further arranged to receive data indicative of an altitude of the vehicle based on data received by the wireless receiver 150. The data indicative of the altitude may be received from a navigation system of the vehicle.

In step 220 the control unit 110 is arranged to determine the forecast of the one or more predetermined weather conditions. The forecast may be a forecast of the likelihood of rain. The forecast may indicate whether there is a predetermined likelihood of the one or more weather conditions, such as rain, within a predetermined period of time, such as 5 minutes, although it will be realised that other time periods may be used. The control unit 110 is arranged to determine the forecast based upon the air pressure. The air pressure may be corrected for the altitude of the vehicle i.e. lower pressure is measured at greater altitude for the same atmospheric pressure, in order to determine the pressure absent an effect of the vehicle's altitude changing. The forecast may be based upon the current air pressure, i.e. an instantaneous measurement, or may be based upon a rate of change of the air pressure within the predetermined period prior to a current point in time. Thus the forecast may be based upon a trend of air pressure measurements wherein a falling air pressure may be indicative of a forecast of rain.

In step 230 the control unit 110 is arranged to generate an output based upon the forecast. The output may be data output by the control unit 110, such as communicated via the communication device 170. However, in other embodiments, the control unit 110 is arranged to control one or more aspects of the vehicle responsive to the forecast via the mechanical actuation means 160. In particular the control unit 110 is arranged, in one embodiment, to one or both of close one or more windows of the vehicle, or to close a roof of the vehicle (either one or more sunroofs or to close a folding roof of the vehicle) responsive to the forecast being indicative of rain. The control unit 110 is arranged to output a control signal to the mechanical actuation means 160, which may be one or more motors, to cause the window(s) or roof to close responsive to the forecast.

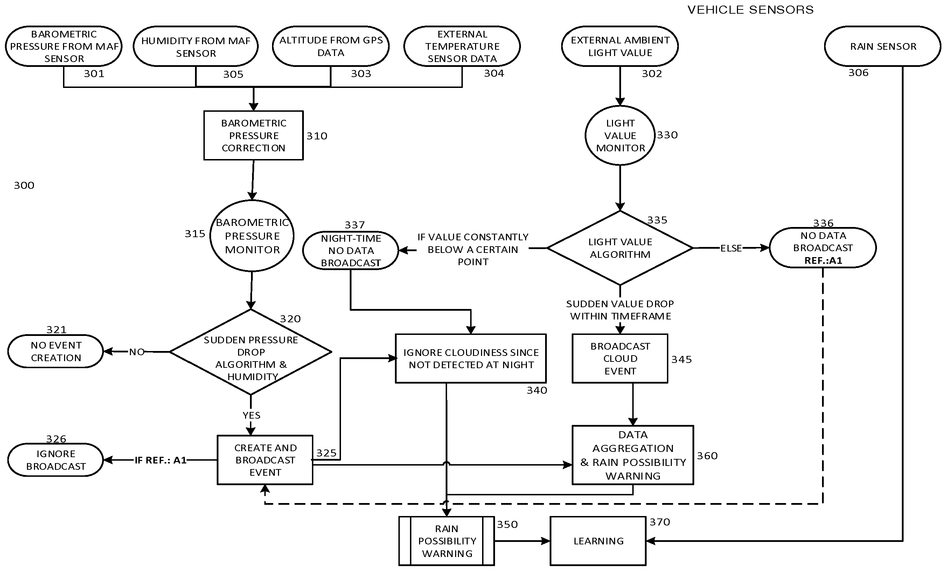

Figure 3 illustrates a method 300 according to a further embodiment of the invention. The method 300 may be performed by the control unit 110 described above. The method 300 is a method of determining a forecast of rain based upon measurements from a plurality of sensors associated with a vehicle.

The method 300 utilises air pressure data 301 received from an air pressure sensor of the vehicle, which in some embodiments may be based upon measurements made by a MAF sensor 120 associated with an engine of the vehicle. In other embodiments the air pressure data 301 may be based upon measurements made by a pressure sensor embedded in a HVAC system. The method 300 further utilises light data 302 indicative of a light level external to the vehicle received from a light sensor 130 of the vehicle, which in some embodiments may be associated with a lighting control system of the vehicle.

The method 300 may also use one or more of: altitude data 303 determined based upon received wireless navigation signals, such as GPS signals; temperature data 304 indicative of a temperature of air external to the vehicle and humidity data 305 indicative of a humidity of air external to the vehicle, which may be provided from a sensor associated with the MAF sensor 120.

The method 300 comprises a step 310 in which the air pressure data is corrected for altitude. In step 310 the control unit 110 is arranged to receive the air pressure data 301 and the altitude data 303 and to determine a corrected air pressure absent the effect of altitude. As will be appreciated air pressure is known to drop by 1.2 kPa for every 100 meters increase in altitude. The control unit 110 is therefore arranged to determine a corrected air pressure figure based on the air pressure 301 and altitude data 303. In some embodiments the control unit 110 is arranged to determine the corrected air pressure based additionally upon the temperature 304 and/or the humidity data 305 in step 310.

In step 315 logging of the corrected air pressure is performed. The logging comprises storing data indicative of the air pressure at predetermined time intervals. For example, in step 315 the control unit 110 may be arranged to store data indicative of the air pressure in the data store 115 at an interval of 30 seconds, although it will be realised that this time interval is exemplary. Step 315 may further comprise, in some embodiments, storing data indicative of the humidity and/or temperature at the predetermined time intervals.

In step 320 it is determined whether the air pressure and, optionally, humidity and/or temperature data, are indicative of a forecast of rain. In one embodiment the control unit 110 is arranged to determine whether a trend of the air pressure data is indicative of the forecast of rain. The control unit 110 may retrieve air pressure data from the data store 115 for a predetermined period of time prior to the current time. The control unit 110 is arranged to determine whether a predetermined pressure drop is indicated by the retrieved data. In some embodiments the control unit 110 is arranged to further determine whether the trend in air pressure data is associated with a trend in one or both of the temperature and/or the humidity data. For example the control unit 110 may be arranged to determine whether a fall in air pressure corresponds to an increase in humidity and/or a fall in temperature based on the respective data stored in the data store 115. If the control unit 110 does not determine that there is a forecast of rain in step 325 then the method moves to step 321 where no event indicative of the forecast of rain is generated. From step 321 the method may return to step 315 to continue the logging of data. If, however, in step 320 the control unit 110 determines a forecast of rain based upon the air pressure data, either alone or in combination with other data, the method moves to step 325.

In step 325 data indicative of the forecast is generated by the control unit 110. The data may be generated as an event indicative of the forecast of rain. The event may be communicated to one or more other systems of the vehicle, or may be retained by the control unit 110 for comparison against data from a further source, such as the light data 302, as will be explained.

The method 300 may comprise steps 330-360 which may be performed at least partially in parallel with steps 310-325 described above. Steps 330-360 use data from one or more further sources, such as the light data 302, indicative of additional ambient conditions, to verify the forecast determined by steps 310-325 in some embodiments. The additional inclusion of steps 330-360 in some embodiments may increase a confidence of the forecast determined by steps 310-325. Embodiments of the invention may be envisaged which do not comprise steps 330-360.

In step 330 logging of the light data 302 is performed. The logging 330 comprises storing the light data 302 at predetermined time intervals. For example, in step 315 the control unit 110 may be arranged to store the light data 302 in the data store 115 at an interval of 30 seconds, although it will be realised that this time interval is exemplary. Data older than a predetermined time may be deleted from the data store 115.

In step 335 it is determined whether the data is indicative of a forecast condition. In some embodiments the control unit 110 is arranged to determine whether the received light data 302 is indicative of the presence of clouds. The light data 302 may be indicative of clouds by exhibiting a drop in light level.

If the light data 302 is not indicative of clouds, for example the light data is indicative of a generally constant brightness of greater than a predetermined level, such as being indicative of sunshine, then the method moves to step 336. In step 336 data indicative of there being no clouds is generated by the control unit 110. The data indicative of there being no clouds generated in step 336 may be used in step 326 to prevent the communication of the event indicative of rain in step 326. That is, the light 302 being indicative of sunshine, or at least indicative of brightness of more than a predetermined level, may prevent the event indicative of the forecast of rain being communicated by the control unit 110.

If the light data 302 is indicative of a light level over a predetermined period of time of less than a predetermined value in step 335, the method moves to step 337. The predetermined period of time may be a relatively long period of time, such as 30 minutes although it will be realised that other periods of time may be used. In this case the light data 302 is determined to be indicative of night time, which may also be confirmed by the control unit 110 obtaining data from a clock system and/or navigation system of the vehicle where navigation data may be used to determine a sunrise and/or sunset time at a location of the vehicle. Following step 337 the method moves to step 340 in which further consideration of the light data 302 is removed. That is, it is assumed in step 340 that the light data 302 is not indicative of the weather. If the arrival of the method at step 340 coincides with the generation of the event indicative of the forecast of rain in step 325 then the method moves to step 350 where an output is generated indicative of the forecast of rain, as will be explained below.

Returning to step 335, if the light data 302 is indicative of a trend of light data 302 measurements wherein a falling light level within a predetermined period may be indicative of cloud cover, then the method moves to step 345.

In step 345 data indicative of the falling light level is generated by the control unit 110. The data may be generated as an event indicative of the falling light level. The event may be communicated to one or more other systems of the vehicle, or may be retained by the control unit 110 for comparison against data from steps 310-325, as will be explained. The event may be referred to as a cloud event indicative of an arrival of one or more clouds.

In step 360, which is reached when the event indicative of rain from step 325 is generated and the event indicative of the falling light level is generated in step 345, it is determined that there is a forecast of rain due to the falling air pressure and light level. Therefore the method moves to step 350 where the output is generated indicative of the forecast of rain.

In step 350 the control unit 110 is arranged to generate an output based upon the forecast of rain. The output may be data output by the control unit 110, such as communicated via the communication device 170 to, for example a server computer or to wireless device such as a device associated with a driver of the vehicle. However, in other embodiments, the control unit 110 is arranged to control one or more aspects of the vehicle responsive to the forecast via the mechanical actuation means 160. In particular the control unit 100 is arranged, in one embodiment, to one or both of close one or more windows of the vehicle, or to close a roof of the vehicle (either one or more sunroofs or to close a folding roof of the vehicle) responsive to the forecast being indicative of rain. The control unit 110 is arranged to output a control signal to the mechanical actuation means 160, which may be one or more motors, to cause the window(s) and/or roof to close responsive to the forecast.

Following step 350 the control unit 110 is, in some embodiments, arranged to receive data from one or more sensors 306 indicative of rain occurring. The control unit 110 is arranged to determine whether the forecast in step 350 was correct. The sensors 306 may include a sensor used to detect the presence of rain, or water, on a windscreen of the vehicle. The data indicative of rain occurring may be stored in the data store 115. Thus, in step 370, the control unit 110 may correlate occasions on which rain actually occurred with correct forecasts generated in step 350. The association may be used in a learning process to improve future forecasting of rain by the control unit 110. The control unit 110 may be arranged in step 370 to modify one or more parameters used in step 320 indicative of an air pressure drop and, also in some embodiments, humidity 305 and/or temperature data 304, and light level data 302 in step 335, to provide more accurate forecasting. This may be advantageous for vehicles used in varying climates.

The embodiments described above allow a vehicle to be provided with a forecast of one or more weather conditions, such as rain, based on data measured by one or more sensors associated with that vehicle. In other embodiments of the invention, as explained below, data from one or more sensors associated with a plurality of vehicles is used to provide a forecast of one or more weather conditions, such as rain.

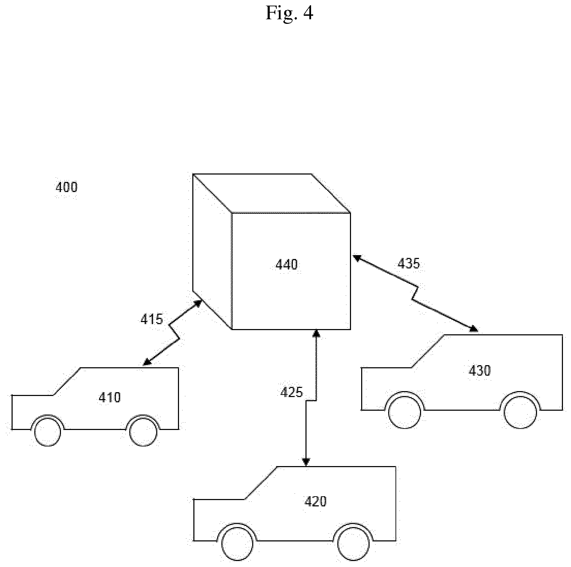

Figure 4 illustrates a system 400 according to an embodiment of the invention. The system 400 comprises a plurality of vehicles 410, 420, 430 and a server computer 440. In one embodiment, each of the plurality of vehicles 410, 420, 430 comprises a system 100 as previously described with reference to Figure 1. The system 100 of each of the vehicles 410, 420, 430 is arranged to communicate data with the server 440. The communication with the server 440 may be through a respective communication channel 415, 425, 435 which is at least partly wireless and may include the Internet. The communication channel 415, 425, 435 may partly include a wireless telecommunications network. Whilst Figure 1 illustrates the system comprising three vehicles 410, 420, 430 it will be realised that this is merely exemplary.

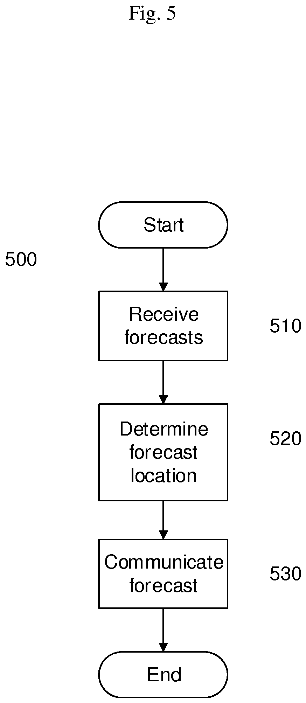

Figure 5 illustrates a further method 500 according to an embodiment of the invention. The method 500 may be performed by the server 400 shown in Figure 4 responsive to data received from the system 100 of each of the vehicles 410, 420, 430 via the communication channel 415, 425, 435.

In step 510 forecast data is received from the system 100 of a plurality of vehicles 410, 420, 430. It will be understood that, whilst three vehicles is referred to, this is merely exemplary. The forecast data may be that communicated in steps 230 and 350 of the methods illustrated in Figures 2 and 3. The forecast data is indicative of one or more weather conditions, such as a forecast of rain. The forecast data comprises location data indicative of a geographic location of each vehicle 410, 420, 430. The location data may be in a predetermined format such as longitude and latitude. The forecast data indicates a likelihood of the weather condition at the associated location within a predetermined period of time as determined based upon one or more measurements made by sensors of the respective vehicle 410, 420, 430.

In step 520 the server 440 is arranged to determine a forecast location of the weather based upon the data received in step 510. The forecast location is an area affected by the weather condition. For example, the server 440 may determine a geographic region where it is likely to rain based on the received data. The server 440 determines the location by aggregating data received in step 510 from a plurality of vehicles and, based on the forecasts at the plurality of locations, determines a region affected. The region may be determined by interconnecting the locations of each of the vehicles i.e. to form a perimeter.

In step 530 data indicative of the forecast is transmitted by the server 440. The server 440 may transmit data indicative of the forecast to, for example, one or more vehicles comprising the system 100 or vehicles having data communication functionality but without the weather forecasting functionality previously described. The vehicles in receipt of the forecast are at a geographic location corresponding to the forecast location or region determined in step 520 and may take appropriate action. The appropriate action may comprise a vehicle causing window(s) or a roof to close responsive to the forecast, as previously explained.

The method 500 enables vehicles without forecasting functionality to benefit from forecasts provided by vehicles having forecasting functionality by means of aggregating data from those forecasting vehicles via the server.

The above described embodiments of the invention provide a weather forecast based on data obtained from one or more sensors associated with a vehicle. The forecast may be useful in the absence of a data connection enabling a forecast to be provided to the vehicle from a computing device.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A computer-implemented method (200; 300) comprising:
receiving (210; 310) data indicative of ambient conditions from one or more sensors (120, 130, 140, 150) associated with a vehicle, wherein the data indicative of ambient conditions comprises data indicative of atmospheric pressure, and the one or more sensors (120, 130, 140, 150) are utilised for one or more additional purposes besides weather prediction;
determining (220; 320) if the data indicative of ambient conditions is indicative of a forecast of one or more weather conditions according to at least one predetermined condition;
outputting (230; 330) data indicative of the forecast; and
configuring one or more systems (160) of the vehicle responsive to the output data indicative of the forecast.

2. The method (200; 300) of claim 1, wherein the one or more systems (160) of the vehicle comprise means for enclosing the vehicle; optionally the means for enclosing the vehicle comprise one of means for closing one or more windows and a roof of the vehicle.

3. The method (300) of claim 1 or 2, comprising receiving (310) data indicative of an altitude of the vehicle and correcting the data indicative of the atmospheric pressure according to the altitude; optionally, the receiving (310) data indicative of the altitude is based upon wireless navigation signals.

4. The method (200; 300) of any preceding claim, wherein the data indicative of the atmospheric pressure is received from a mass airflow (MAF) sensor (120) associated with an engine of the vehicle.

5. The method (300) of any preceding claim, comprising receiving (335) weather data indicative of the one or more weather conditions and correlating the weather data with the output data indicative of the forecast; optionally, the determining (320) if the data is indicative of one or more weather conditions is based upon the correlation between the weather data and the output data indicative of previous forecasts.

6. The method (200; 300) of any preceding claim, wherein the determining (220; 320) if the data is indicative of one or more weather conditions is based upon a trend in the data indicative of the atmospheric pressure.

7. The method of (200; 300) any preceding claim, wherein the data indicative of ambient conditions comprises one or more of data indicative of a light level, data indicative of a temperature external to the vehicle, and data indicative of humidity.

8. The method (200; 300) of claim 7 when dependent upon claim 6, wherein the at least one predetermined condition comprises determining if a trend is present in the data indicative of the light level and the atmospheric pressure.

9. The method (200; 300) of any preceding claim, wherein the outputting (330) data indicative of the forecast comprises transmitting data to a remote computing device.

10. An apparatus (100) for determining a weather forecast, comprising:
one or more sensors (120, 130, 140, 150) for association with a vehicle arranged to determine ambient conditions proximal to the vehicle when in use and to output data indicative of the ambient conditions, wherein the one or more sensors (120, 130, 140, 150) comprises a sensor (120), utilised for one or more additional purposes besides weather prediction, for outputting data to the control unit indicative of atmospheric pressure;
a control unit (110) arranged to receive data indicative of ambient conditions, to determine if the data indicative of ambient conditions is indicative of a forecast of one or more weather conditions based upon at least one predetermined condition and to output data indicative of the forecast, and arranged to configure one or more systems (160) of the vehicle responsive to the output data indicative of the forecast.

11. The apparatus (100) of claim 10, comprising at least one mechanical actuator (160) for configuring the vehicle responsive to the data indicative of the forecast; optionally the at least one mechanical actuator (160) is arranged for enclosing the vehicle; optionally the at least one mechanical actuator (160) is arranged to close one or more windows and/or a roof of the vehicle responsive to the data indicative of the forecast.

12. The apparatus (100) of claim 10 or 11, wherein the data indicative of the atmospheric pressure is received from a mass airflow (MAF) sensor (120) associated with an engine of the vehicle.

13. The apparatus (100) of any of claims 10 to 12, comprising one or more sensors (120, 130, 140, 150) for determining weather conditions and outputting weather data to the control unit indicative thereof, wherein the control unit (110) is arranged to correlate the weather data with the output data indicative of the forecast; optionally the weather conditions comprise rain; and/or the control unit (110) is arranged to determine if the data is indicative of one or more weather conditions based upon the correlation between the weather data and the output data indicative of previous forecasts.

14. The apparatus (100) of any of claims 10 to 13, wherein control unit (110) is arranged to store, in a data store (115), data indicative of the ambient conditions over a period of time and the at least one predetermined condition comprises determining if the stored data is indicative of one or more weather conditions based upon a trend in the data.

15. A system (400), comprising:
a server computer (440);
at least one vehicle (410, 420, 430) having one or more sensors for measuring ambient conditions and a control unit arranged to determine a weather forecast based on the ambient conditions, wherein the one or more sensors comprise a sensor (120), utilised for one or more additional purposes besides weather prediction, for outputting data to the control unit indicative of atmospheric pressure,, wherein the control unit is communicably coupled to the server computer to communicate forecast data indicative of the weather forecast to the server, wherein the server (440) is arranged to communicate information indicative of the forecast to a computing device associated with one or more vehicles (410, 420, 430), and wherein the computing device is arranged to control a configuration of the vehicle (410, 420, 430) responsive to the forecast.

## Patentansprüche

1. Computerimplementiertes Verfahren (200; 300), Folgendes umfassend:
Empfangen (210; 310) von Daten, die Umgebungsbedingungen anzeigen, von einem oder mehreren Sensoren (120, 130, 140, 150), die mit einem Fahrzeug verbunden sind, wobei die Daten, die Umgebungsbedingungen anzeigen, Daten umfassen, die Atmosphärendruck anzeigen, und der eine oder die mehreren Sensoren (120, 130, 140, 150) für einen oder mehrere zusätzliche Zwecke neben einer Wettervorhersage genutzt werden;
Bestimmen (220; 320), ob die Daten, die Umgebungsbedingungen anzeigen, eine Prognose einer oder mehrerer Wetterbedingungen gemäß wenigstens einer vorbestimmten Bedingung anzeigen;
Ausgeben (230; 330) von Daten, die die Prognose anzeigen; und
Konfigurieren eines oder mehrerer Systeme (160) des Fahrzeugs reagierend auf die Ausgabedaten, die die Prognose anzeigen.

2. Verfahren (200; 300) nach Anspruch 1, wobei das eine oder die mehreren Systeme (160) des Fahrzeugs Mittel zum Umschließen des Fahrzeugs umfassen;
wobei gegebenenfalls die Mittel zum Umschließen des Fahrzeugs ein Mittel zum Schließen eines oder mehrerer Fenster oder eines Dachs des Fahrzeugs umfassen.

3. Verfahren (300) nach Anspruch 1 oder 2, umfassend ein Empfangen (310) von Daten, die eine Höhe des Fahrzeugs anzeigen, und ein Korrigieren der Daten, die den Atmosphärendruck gemäß der Höhe anzeigen;
gegebenenfalls, wobei das Empfangen (310) von Daten, die die Höhe anzeigen, auf drahtlosen Navigationssignalen basiert.

4. Verfahren (200; 300) nach einem der vorhergehenden Ansprüche, wobei die Daten, die den Atmosphärendruck anzeigen, von einem Luftmassen(*mass airflow -* MAF)-Sensor (120) empfangen werden, der mit einem Motor des Fahrzeugs verbunden ist.

5. Verfahren (300) nach einem der vorhergehenden Ansprüche, umfassend ein Empfangen (335) von Wetterdaten, die die eine oder die mehreren Wetterbedingungen anzeigen, und ein Korrelieren der Wetterdaten mit den Ausgabedaten, die die Prognose anzeigen;
gegebenenfalls, wobei das Bestimmen (320), ob die Daten eine oder mehrere Wetterbedingungen anzeigen, auf der Korrelation zwischen den Wetterdaten und den Ausgabedaten, die frühere Prognosen anzeigen, basiert.

6. Verfahren (200; 300) nach einem der vorhergehenden Ansprüche, wobei das Bestimmen (220; 320), ob die Daten eine oder mehrere Wetterbedingungen anzeigen, auf einem Trend in den Daten basiert, die den Atmosphärendruck anzeigen.

7. Verfahren nach (200; 300) einem der vorhergehenden Ansprüche, wobei die Daten, die Umgebungsbedingungen anzeigen, Daten, die eine Lichtstärke anzeigen, Daten, die eine Temperatur außerhalb des Fahrzeugs anzeigen, und/oder Daten, die Feuchtigkeit anzeigen, umfassen.

8. Verfahren (200; 300) nach Anspruch 7, wenn abhängig von Anspruch 6, wobei die wenigstens eine vorbestimmte Bedingung das Bestimmen umfasst, ob ein Trend in den Daten vorhanden ist, die die Lichtstärke und den Atmosphärendruck anzeigen.

9. Verfahren (200; 300) nach einem der vorhergehenden Ansprüche, wobei das Ausgeben (330) von Daten, die die Prognose anzeigen, ein Übertragen von Daten an eine entfernte Rechenvorrichtung umfasst.

10. Einrichtung (100) zum Bestimmen einer Wetterprognose, Folgendes umfassend:
einen oder mehrere Sensoren (120, 130, 140, 150) zur Verbindung mit einem Fahrzeug, die angeordnet sind, um Umgebungsbedingungen in der Nähe des Fahrzeugs, wenn es in Verwendung ist, zu bestimmen, und Daten auszugeben, die die Umgebungsbedingungen anzeigen, wobei der eine oder die mehreren Sensoren (120, 130, 140, 150) einen Sensor (120) umfassen, der für einen oder mehrere zusätzliche Zwecke neben der Wettervorhersage genutzt wird, um Daten an die Steuereinheit auszugeben, die den Atmosphärendruck anzeigt;
eine Steuereinheit (110), die angeordnet ist, um Daten zu empfangen, die Umgebungsbedingungen anzeigen, um zu bestimmen, ob die Daten, die Umgebungsbedingungen anzeigen, eine Prognose einer oder mehrerer Wetterbedingungen basierend auf wenigstens einer vorbestimmten Bedingung anzeigen, und um Daten auszugeben, die die Prognose anzeigen, und angeordnet ist, um ein oder mehrere Systeme (160) des Fahrzeugs reagierend auf die Ausgabedaten, die die Vorhersage anzeigen, zu konfigurieren.

11. Einrichtung (100) nach Anspruch 10, die wenigstens ein mechanisches Betätigungselement (160) umfasst, um das Fahrzeug reagierend auf die Daten, die die Prognose anzeigen, zu konfigurieren;
wobei gegebenenfalls das wenigstens eine mechanische Betätigungselement (160) zum Umschließen des Fahrzeugs angeordnet ist;
wobei gegebenenfalls das wenigstens eine mechanische Betätigungselement (160) angeordnet ist, um ein oder mehrere Fenster und/oder das Dach des Fahrzeugs reagierend auf die Daten, die die Prognose anzeigen, zu schließen.

12. Einrichtung (100) nach Anspruch 10 oder 11, wobei die Daten, die den Atmosphärendruck anzeigen, von einem Luftmassen(MAF)-Sensor (120) empfangen werden, der mit einem Motor des Fahrzeugs verbunden ist.

13. Einrichtung (100) nach einem der Ansprüche 10 bis 12, umfassend einen oder mehrere Sensoren (120, 130, 140, 150) zum Bestimmen der Wetterbedingungen und zum Ausgeben von Wetterdaten an die Steuereinheit, die diese anzeigt, wobei die Steuereinheit (110) angeordnet ist, um die Wetterdaten mit den Ausgabedaten zu korrelieren, die die Prognose anzeigen;
gegebenenfalls, wobei die Wetterbedingungen Regen umfassen; und/oder
die Steuereinheit (110) angeordnet ist, um zu bestimmen, ob die Daten eine oder mehrere Wetterbedingungen anzeigen, basierend auf der Korrelation zwischen den Wetterdaten und den Ausgabedaten, die frühere Prognosen anzeigen.

14. Einrichtung (100) nach einem der Ansprüche 10 bis 13, wobei die Steuereinheit (110) angeordnet ist, um in einem Datenspeicher (115) Daten zu speichern, die die Umgebungsbedingungen über einen Zeitraum anzeigen, und wobei die wenigstens eine vorbestimmte Bedingung das Bestimmen umfasst, ob die gespeicherten Daten eine oder mehrere Wetterbedingungen, basierend auf einem Trend in den Daten, anzeigen.

15. System (400), Folgendes umfassend:
einen Serverrechner (440);
wenigstens ein Fahrzeug (410, 420, 430) mit einem oder mehreren Sensoren zum Messen von Umgebungsbedingungen und einer Steuereinheit, die zum Bestimmen einer Wetterprognose basierend auf den Umgebungsbedingungen angeordnet ist, wobei der eine oder die mehreren Sensoren einen Sensor (120) umfassen, der für einen oder mehrere zusätzliche Zwecke neben der Wettervorhersage genutzt wird, zum Ausgeben von Daten an die Steuereinheit, die den Atmosphärendruck anzeigt, wobei die Steuereinheit kommunikationsfähig mit dem Serverrechner gekoppelt ist, um Prognosedaten, die die Wettervorhersage anzeigen, an den Server zu kommunizieren, wobei der Server (440) angeordnet ist, um Informationen, die die Prognose anzeigen, an eine Rechenvorrichtung zu kommunizieren, die mit einem oder mehreren Fahrzeugen (410, 420, 430) verbunden ist, und wobei die Rechenvorrichtung angeordnet ist, um eine Konfiguration des Fahrzeugs (410, 420, 430) reagierend auf die Prognose zu steuern.

## Revendications

1. Procédé mis en oeuvre par ordinateur (200, 300), consistant à :
recevoir (210 ; 310) des données indiquant les conditions ambiantes provenant d'au moins un capteur (120, 130, 140, 150) associé à un véhicule, les données indiquant les conditions ambiantes comprenant des données indiquant la pression atmosphérique, et l'au moins un capteur (120, 130, 140, 150) servant dans au moins un autre but que la prévision météorologique ;
déterminer (220 ; 320) si les données indiquant les conditions ambiantes indiquent une prévision d'une ou de plusieurs conditions météorologiques selon au moins une condition prédéterminée ;
produire (230 ; 330) des données indiquant la prévision ; et à
configurer un ou plusieurs systèmes (160) du véhicule en réponse aux données produites indiquant la prévision.

2. Procédé (200 ; 300) selon la revendication 1, dans lequel l'au moins un système (160) du véhicule comprend des moyens de confinement du véhicule ;
éventuellement, les moyens de confinement du véhicule comprennent l'un des moyens de fermeture d'une ou de plusieurs vitres et d'un toit du véhicule.

3. Procédé (300) selon la revendication 1 ou 2, comprenant la réception (310) de données indiquant une altitude du véhicule et la correction des données indiquant la pression atmosphérique en fonction de l'altitude ;
éventuellement, les données de réception (310) indiquant l'altitude sont basées sur des signaux de navigation sans fil.

4. Procédé (200 ; 300) selon l'une quelconque des revendications précédentes, dans lequel les données indiquant la pression atmosphérique sont reçues d'un capteur de débit d'air massique, MAF, (120) associé à un moteur du véhicule.

5. Procédé (300) selon l'une quelconque des revendications précédentes, comprenant la réception (335) de données météorologiques indiquant une ou plusieurs conditions météorologiques et la corrélation des données météorologiques avec les données produites indiquant la prévision ;
éventuellement, la détermination (320) si les données indiquent qu'une ou plusieurs conditions météorologiques sont basées sur la corrélation entre les données météorologiques et les données produites indiquant les prévisions précédentes.

6. Procédé (200 ; 300) selon l'une quelconque des revendications précédentes, dans lequel la détermination (220 ; 320) si les données indiquent une ou plusieurs conditions météorologiques est basée sur une tendance des données indiquant la pression atmosphérique.

7. Procédé de (200 ; 300) selon l'une quelconque des revendications précédentes, dans lequel les données indiquant les conditions ambiantes comprennent une ou plusieurs des données indiquant une intensité lumineuse, des données indiquant une température externe au véhicule et des données indiquant une humidité.

8. Procédé (200 ; 300) selon la revendication 7, lorsqu'il dépend de la revendication 6, dans lequel l'au moins une condition prédéterminée consiste à déterminer si une tendance est présente dans les données indiquant l'intensité lumineuse et la pression atmosphérique.

9. Procédé (200 ; 300) selon l'une quelconque des revendications précédentes, la production (330) de données indiquant la prévision comprennent la transmission de données vers un dispositif informatique distant.

10. Appareil (100) de détermination d'une prévision météorologique, comprenant :
un ou plusieurs capteurs (120, 130, 140, 150) destinés à être associés à un véhicule agencé pour déterminer les conditions ambiantes à proximité du véhicule lorsqu'il est utilisé et pour produire des données indiquant les conditions ambiantes, dans lequel un ou plusieurs capteurs (120, 130, 140, 150) comprennent un capteur (120) utilisé dans un ou plusieurs autres buts en plus des prévisions météorologiques, pour transmettre les données à l'unité de commande indiquant la pression atmosphérique ;
une unité de commande (110) agencée pour recevoir des données indiquant les conditions ambiantes, pour déterminer si les données indiquant les conditions ambiantes indiquent une prévision d'une ou de plusieurs conditions météorologiques sur la base d'au moins une condition prédéterminée et pour produire des données indiquant la prévision, et agencée pour configurer un ou plusieurs systèmes (160) du véhicule en réaction aux données produites indiquant la prévision.

11. Appareil (100) selon la revendication 10, comprenant au moins un actionneur mécanique (160) destiné à configurer le véhicule en réaction aux données indiquant la prévision ;
éventuellement, l'au moins un actionneur mécanique (160) est agencé pour confiner le véhicule ;
éventuellement, l'au moins un actionneur mécanique (160) est agencé pour fermer une ou plusieurs vitres et/ou un toit du véhicule en réaction aux données indiquant la prévision.

12. Appareil (100) selon l'une quelconque des revendications 10 ou 11, dans lequel les données indiquant la pression atmosphérique sont reçues d'un capteur de débit d'air massique, MAF, (120) associé à un moteur du véhicule.

13. Appareil (100) selon l'une quelconque des revendications 10 à 12, comprenant un ou plusieurs capteurs (120, 130, 140, 150) destinés à déterminer les conditions météorologiques et de transmettre des données météorologiques à l'unité de commande indiquant celles-ci, dans lequel l'unité de commande (110) est agencée pour corréler les données météorologiques avec les données produites indiquant la prévision ;
éventuellement, les conditions météorologiques comprennent la pluie ; et/ou
l'unité de commande (110) est agencée pour déterminer si les données indiquent une ou plusieurs conditions météorologiques sur la base de la corrélation entre les données météorologiques et les données produites indiquant les prévisions précédentes.

14. Appareil (100) selon l'une quelconque des revendications 10 à 13, dans lequel l'unité de commande (110) est agencée pour stocker, dans une mémoire de données (115), des données indiquant les conditions ambiantes pendant une période donnée et l'au moins une condition prédéterminée comprend la détermination si les données stockées indiquent une ou plusieurs conditions météorologiques sur la base d'une tendance des données.

15. Système (400), comprenant :
un ordinateur serveur (440) ;
au moins un véhicule (410, 420, 430) comportant un ou plusieurs capteurs destinés à mesurer les conditions ambiantes et une unité de commande agencée pour déterminer une prévision météorologique sur la base des conditions ambiantes, dans lequel l'un ou plusieurs capteurs comprennent un capteur (120), utilisé pour un ou plusieurs autres buts que la prévision météorologique, pour transmettre à l'unité de commande des données indiquant la pression atmosphérique, dans lequel l'unité de commande est couplée en communication à l'ordinateur serveur pour communiquer au serveur des données de prévision indiquant la prévision météorologique, dans lequel le serveur (440) est agencé pour communiquer des informations indiquant la prévision à un dispositif informatique associé à un ou plusieurs véhicules (410, 420, 430), et dans lequel le dispositif informatique est agencé pour commander une configuration du véhicule (410, 420, 430) en réaction à la prévision.
